Europäisches Patentamt

European Patent Office

Office européen des brevets

(19)

(11) Publication number: **0 447 273 A2**

# (12) EUROPEAN PATENT APPLICATION

(21) Application number: 91302327.1

(22) Date of filing: 18.03.91

(51) Int. Cl.⁵: **B26D 1/18**

(30) Priority: 16.03.90 JP 64258/90
05.04.90 JP 89156/90

(43) Date of publication of application:
18.09.91 Bulletin 91/38

(84) Designated Contracting States:
DE FR GB

(71) Applicant: Bridgestone Corporation
10-1, Kyobashi 1-Chome Chuo-Ku
Tokyo 104 (JP)

(72) Inventor: Okuyama, Koji, c/o Bridgestone
Corporation
Technical Centre, 3-1-1, Ogawahigashi-cho
Kodaira-shi, Tokyo (JP)
Inventor: Kaida, Masaaki, c/o Bridgestone
Corporation
Technical Centre, 3-1-1, Ogawahigashi-cho
Kodaira-shi, Tokyo (JP)
Inventor: Ichinohe, Akihito, c/o Bridgestone
Corporation
Technical Centre, 3-1-1, Ogawahigashi-cho
Kodaira-shi, Tokyo (JP)

(74) Representative: Silverman, Warren et al
HASELTINE LAKE & CO. Hazlitt House 28
Southampton Buildings Chancery Lane
London WC2A 1AT (GB)

(54) Method and apparatus for cutting and wrapping a belt-like member around a drum.

(57) Upon feeding a belt-like member cut into a fixed length on a conveyor by means of a cutter to a drum by means of the conveyor and wrapping it around the circumferential surface of the drum, the cut length of the belt-like member is set to be somewhat shorter than the circumferential length of the drum. At the time of wrapping, the belt-like member is stretched by a predetermined amount to make its leading and trailing ends coincide with each other after the completion of wrapping. The belt-like member is cut by making the cutter travel along a predetermined straight reference line of travel. The configuration of the lines of cut at the leading end and at the trailing end are measured, and also a straight line approximating the line of cut, the inclination angle of the approximating straight line with respect to the predetermined straight reference line of travel, and the amount of deviation from the predetermined straight reference line of travel at respective points on the line of cut are obtained. The direction of the cut trailing end and/or the cut leading end are corrected on the basis of the obtained inclination angle so as to coincide with each other, the belt-like member is held and set on the conveyor, and the amount of stretching of the belt-like member upon wrapping is corrected on the basis of the obtained amounts of deviation.

EP 0 447 273 A2

FIG. 1

# METHOD AND APPARATUS FOR CUTTING AND WRAPPING A BELT-LIKE MEMBER AROUND A DRUM

The present invention relates to a method and apparatus for cutting and wrapping a belt-like member, and in particular to the steps of cutting a belt-like member such as a carcass material, a steel breaker material or the like with a large number of cords embedded in parallel therein, into a fixed length on a conveyor by means of a cutter, feeding the thus obtained belt-like member onto a drum by means of the conveyor, and wrapping it around the circumferential surface of the drum, in a process of, for instance, manufacturing a tyre.

A belt-like member cutting and wrapping apparatus (cord-reinforced strip wrapping apparatus) of the above-described type is disclosed in Laid-Open Japanese Patent Specification No. 1-222933 (1989). This apparatus comprises a conveyer (strip feed conveyor) and a forming drum which are driven by a positionable motor, and a cutter for cutting the strip on the conveyer parallel with the embedded cords. The cutter travels parallel to the embedded cords and also can resiliently displace at right angles to the cords. Hence, if upon cutting the cutter should interfere with a cord, it can displace at right angles thereto, so that it can cut a strip in parallel to the cords, thus avoiding the cord. Provision is made so that the amount of displacement of the cutter can be detected.

The cut length of the strip is preliminarily set to be somewhat shorter than the circumferential length of the drum. The material is stretched over the drum by stopping the rotation of the drum and reversely rotating the conveyor, or stopping the conveyor and rotating the drum normally, and then is wrapped around the drum. Thereby the leading end and the trailing end of the strip are made to coincide with each other after the wrapping process. However if the cutter displaces at right angles to the cords as described above, the actual cut length of the strip will be different from the above-mentioned preset cut length. Therefore, in this wrapping apparatus, provision is made so that the amount that the above-described conveyor and forming drum feed the strip may be controlled relatively on the basis of the preset cut length and the displacement of the aforementioned cutter thus to enable the leading end and the trailing end of the strip to coincide with each other when wrapped around the forming drum.

The above-described cord-reinforced strip wrapping apparatus is constructed on the assumption that, upon cutting, the cords always lie at a constant bias angle with respect to the strip and that the line of cut formed by the cutter is always a straight line parallel to the cords.

However, in practice, the bias angle of the cords is not always constant from the beginning of the strip to its end, and sometimes a variation in the bias angles of respective cords arises.

In addition, since during cutting, the travel of the cutter is effected along the embedded cords, the line of cut is not always a straight line, and sometimes a zigzag shaped line of cut is produced. In such cases, overlapping portions and spaced portions are produced at the join between the leading end and the trailing end of the strip when it is stretched over the circumferential surface of the drum. This overlapped or spaced amount must be kept strictly within a predetermined limited range.

However, by detecting the displacement of the cutter at right angles at just one point upon cutting the leading end and the trailing end, and by merely correcting the amount of stretch on the basis of this displacement, as is the case with the above-described apparatus in the prior art, it cannot be guaranteed that at the end of the wrapping process the leading end line of cut and the trailing end line of cut have the same inclination angle, and that these lines of cut coincide with each other over the entire width of the strip. Moreover, in the case where the lines of cut have a zigzag shape, it is difficult to control the amount of stretch so that the overlapped amount or spaced amount always remains within a predetermined limited range.

For a strip which extends over a long length before cutting, the bias angles of the cords embedded therein may not always be constant from one end to another, being somewhat offset with respect to a preset value. When such a strip is wound around a winding shaft of a truck, or the like, before it is cut, the dimensions of the strip may vary according to its proximity to the winding core at, for example, the beginning of winding, the central portion of winding and the end of winding. The bias angles of the cords may also be somewhat varied.

If such a strip, with the bias angles of the cords varying depending upon their location, is cut by making a cutter travel along a fixed direction of travel, as is the case with the above-described apparatus in the prior art, then, even though the cutter can freely displace at right angles to the direction of travel, there is a large possibility that the cutter will ride on the cords because the direction of the blade is always directed in the direction of travel. If the bias angle of the cords becomes greatly different from the inclination angle of the direction of travel of the cutter, then such inconvenience is especially liable to occur.

The present invention has been worked out in view of the aforementioned circumstances, and accordingly the invention provides a method for cutting and wrapping a belt-like member, wherein said belt-like member is cut into a fixed length by making first and second inclined cuts to provide leading and trailing ends which are to coincide with each other after the completion of wrapping around a drum to provide a covering substantially matched to the circumferential length of the drum with spacing or overlapping between the leading and trailing ends not exceeding a predetermined maximum value; characterised by the steps of:

a) cutting the belt-like member by making a cutter travel along a predetermined straight reference line ;

b) measuring the configuration of the lines of cut at the leading end and at the trailing end,

c) defining

i) straight lines which approximate said lines of cut,

ii) the inclination angles between said approximating straight lines and said predetermined straight reference line, and

iii) the amount of deviation from said predetermined straight reference line of said approximating straight lines at respective points on said lines of cut;

d) i) holding and setting said belt-like member on a conveyor while correcting, on the basis of said inclination angle obtained with respect to the trailing end line of cut and said inclination angle obtained with respect to the leading end line of cut, the direction of the trailing end line of cut so that the inclination angle of said trailing end line of cut coincides with the inclination angle of said leading end line of cut, or

d) ii)(a) holding and setting the leading end portion of the belt-like member on said conveyor after correcting the direction of said leading end line of cut so that the approximating straight line of the leading end line of cut coincides with the straight reference line inclined at a predetermined angle after cutting of the leading end, and

(b) holding and setting the trailing end portion of the belt-like member on said conveyor after correcting the direction of said trailing end line of cut so that the approximating straight line of the trailing end line of cut coincides with the straight reference line inclined at said predetermined angle.

e) calculating on the basis of said amount of deviation defined with respect to the leading and trailing ends,the amount of overlap and spacing that would be produced between the leading end and trailing end lines of cut upon completion of wrapping, and

f) correcting the amount of stretch of the belt-like member upon wrapping so that said spaced and overlapped amounts do not exceed said maximum value.

Cutting of the belt-like member is carried out by making a cutter travel along a predetermined straight reference line of travel defined, for instance, by a path of travel member guiding the cutter and mounted transversely of the belt-like member. Sometimes the cutter may displace perpendicular to the above-mentioned straight reference line of travel, and as a result, the shape of the practical locus of the cutter, i.e. the line of cut, will not always coincide with the above-mentioned predetermined straight reference line of travel. Therefore, in the method according to the present invention, when the leading end and the trailing end of the belt-like member are cut, the configurations (coordinates) of the loci of the cutter, i.e. the lines of cut, are measured. This is carried out, for instance, by measuring the amount of displacement from the predetermined straight line of travel at respective travelling positions of the cutter. Straight lines which approximate the lines of cut are defined from these configurations. Also defined is the inclination angle of the aforementioned approximating straight lines with respect to the above-mentioned predetermined straight reference line of travel. After the trailing end has been cut, by holding the above-mentioned trailing end portion by appropriate holding means and changing the attitude of the belt-like member, correction is made so that the above-mentioned inclination angle of the trailing end after cutting coincides with the above-mentioned inclination angle of the leading end line of cut. The belt-like member is then set and held on the conveyor in this state. Accordingly, when the belt-like member has been set and held on the conveyor, an angular error is not produced between the approximating straight line of the leading end and the approximating straight line of the trailing end.

However, since the line of cut deviates either side of the approximating straight line, the leading end and the trailing end will be overlapped in some places and will be spaced from one another in other places. By merely stretching the belt-like member by a predetermined amount, it is possible to cause the amount of overlap in the overlapped portions and the amount of spacing in the spaced portions to be always within a predetermined limited range. Therefore, in the method according to the present invention, the amount of deviation from the above-described predetermined straight reference line of travel at the respective points on the lines of cut are defined upon cutting of the leading end and the trailing end. The above-mentioned overlapped and spaced amounts are defined from the amount of deviation of the leading and trailing ends from the reference line of travel, and the amount of stretch of the belt-like member is corrected so that the maximum values of both the aforementioned overlapped and spaced portions may be kept within a predetermined limited range.

Thus, even if the belt-like member is not cut at a precise bias angle along a predetermined straight reference line, the leading end and the trailing end of the belt-like member can be joined together, after wrapping the belt-like member around the drum, with overlapped portions and spaced portions therebetween which fall within a predetermined limited range.

The belt-like member is held and set on the conveyor after correcting, on the basis of the inclination angle sought with respect to the trailing end line of cut and the inclination angles sought with respect to the leading end line of cut in the above-described method, the direction of the trailing end line of cut so that the inclination angle of this line of cut coincides with the inclination angle of the leading end line of cut. Modification can be made so that the leading end portion of the belt-like member is held and set on the conveyor after correcting the direction of the leading end line of cut so that the approximating straight line of the leading end line of cut coincides with the straight reference line inclined at a predetermined angle after cutting of the leading end. Also, the trailing end portion of the belt-like member is held and set on the conveyor after correcting the direction of the trailing end line of cut so that the approximating straight line of the trailing end line of cut coincides with the straight reference line inclined at the above-mentioned predetermined angle. Thereby, the inclination angles of the leading and trailing end approximating straight lines are made to coincide with one another.

According to another aspect of the present invention there is provided an apparatus for cutting and wrapping a belt-like member, wherein said belt-like member is cut into a fixed length by making first and second inclined cuts, by means of a cutter, to provide leading and trailing ends which are to coincide with each other after completion of wrapping to provide a covering on a drum substantially matched to the circumferential length of said drum with spacing or overlapping between the leading and trailing ends not exceeding a predetermined maximum value, said belt-like member being fed to said drum by means of a conveyor, characterised in that said apparatus comprises:

a) stretching means for stretching said belt-like member as it is wrapped around said drum,

b) a path of travel member extending horizontally above and transverse of said conveyor,

c) a cutter suspended from said path of travel member so as to be able to travel along said member in the longitudinal direction thereof and so as to be displaceable at right angles to said longitudinal direction,

d) holding means capable of holding, independently and while maintaining their configuration, the respective end portions in front of and behind the line of cut of said belt-like member,

e) a rotation mechanism for making said holding means rotate above a vertical axis,

f) means for measuring the configuration of said line of cut,

g) defining means for defining

i) a straight line which approximates said line of cut,

ii) an inclination angle of said approximating straight line with respect to said direction of travel, and

iii) the amount of deviation from said longitudinal direction of said approximating straight line at respective points on said line of cut.

h) rotation control means for controlling said rotating mechanism on the basis of said inclination angle, and

i) stretch amount control means for controlling, on the basis of said amount of deviation, said stretching means upon cutting of the leading and trailing ends of said belt-like member.

Also, according to another embodiment of the present invention, there is provided a method of cutting and wrapping a belt-like member, wherein a belt-like member of fixed length, which has been obtained by successively cutting, by means of a cutter, a long sheet material with a large number of cords embedded therein at a predetermined bias angle is fed onto a drum by means of a conveyor and wrapped around the circumferential surface of said drum; characterised by the steps of:

a) measuring the configuration of the line of cut,

b) defining,

i) a straight line which approximates said line of cut, and

ii) the bias angle of said approximating straight line with respect to said belt-like member, and

c) correcting the bias angle of said predetermined straight reference line so as to substantially coincide with the average value of the bias angle of said approximating straight lines obtained from a plurality of recent calculations.

According to this method, even in the case where the bias angle of the cords embedded in the sheet material change gradually, since the angle of travel of the cutter varies in accordance with the change in the bias angle of the cords, the difference between the angle of travel and the bias angle is always small, and the blade of the cutter will travel substantially along the cords. Accordingly, the inconvenience created by the cutter riding up onto the cords can be prevented.

According to another aspect of the present invention there is provided an apparatus for cutting and wrapping a belt-like member, which comprises:

a) a travelling mechanism in which a travelling member traverses above a sheet material,

b) a rotation mechanism for rotating said travelling mechanism to change the angle of travel of the travelling member with respect to the sheet material,

c) a cutter suspended from the travelling member which is movable at right angles to its direction of travel,

d) first detector means for detecting the position of travel of said cutter in the direction of said travelling mechanism,

e) second detector means for detecting the displacement of said cutter at right angles to said direction of travel,

f) defining means for defining the angle of cut made by means of said cutter on the basis of signals supplied by said first and second detector means, and

g) control means for driving and controlling said rotation mechanism on the basis of a plurality of recent calculation results derived by said defining means.

For a better understanding of the invention, and to show how the same may be carried into effect, reference will now be made, by way of example only, to the accompanying drawings, in which:

Fig. 1 is a general side view of an apparatus according to one preferred embodiment of the present invention;

Fig. 2 is a schematic arrangement view of a magnet block provided within a conveyor of the present invention;

Fig. 3 is a plan view of a cutting and attracting device of the present invention;

Fig. 4 is a side view of the same as viewed in the direction of arrow IV in Fig. 3;

Fig. 5 is a side view, partly in cross-section, of an attracting device of the present invention;

Fig. 6 is a plan view of an attracting device;

Fig. 7 is a front view, partly in cross-section, of an attracting device;

Fig. 8 is a front view of a cutting device;

Fig. 9 is a side view of a driven pulley;

Fig. 10 is a block diagram of an electrical system;

Figs. 11 and 12 are diagrams which show graphically the results of calculations;

Figs. 13 to 15 are schematic views showing various modes of spacing and overlapping produced between the leading end and the trailing end of a belt-like member;

Fig. 16 is a general top view of a cutting device in another preferred embodiment of the present invention;

Fig. 17 is a side view of the same;

Fig. 18 is a cross-section view taken along line XVIII-XVIII in Fig. 17; and

Fig. 19 is a diagram which shows graphically the results of calculations.

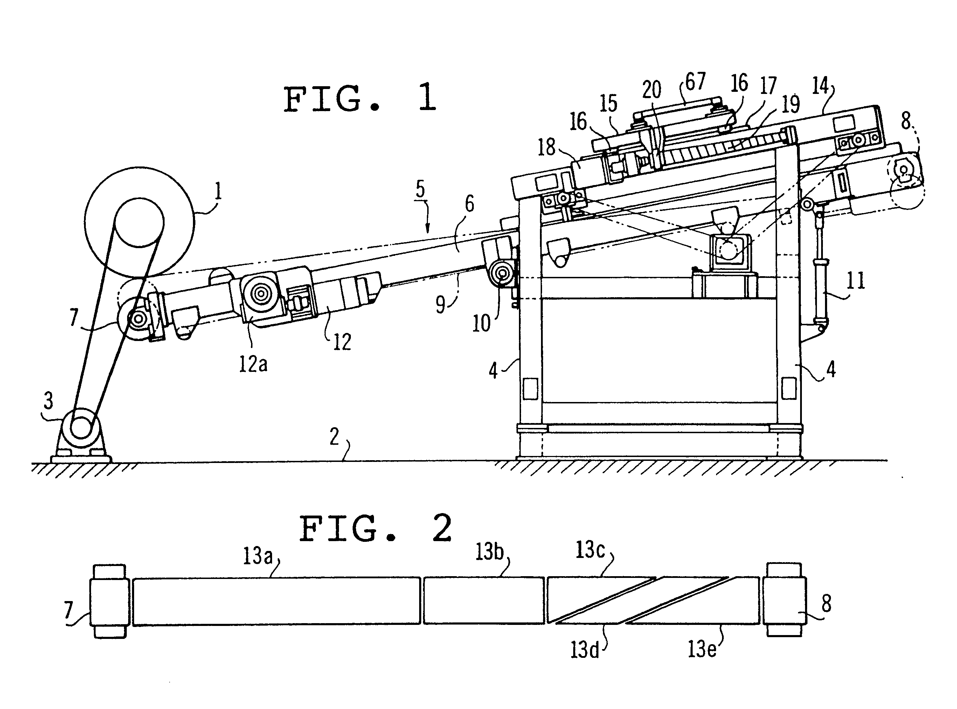

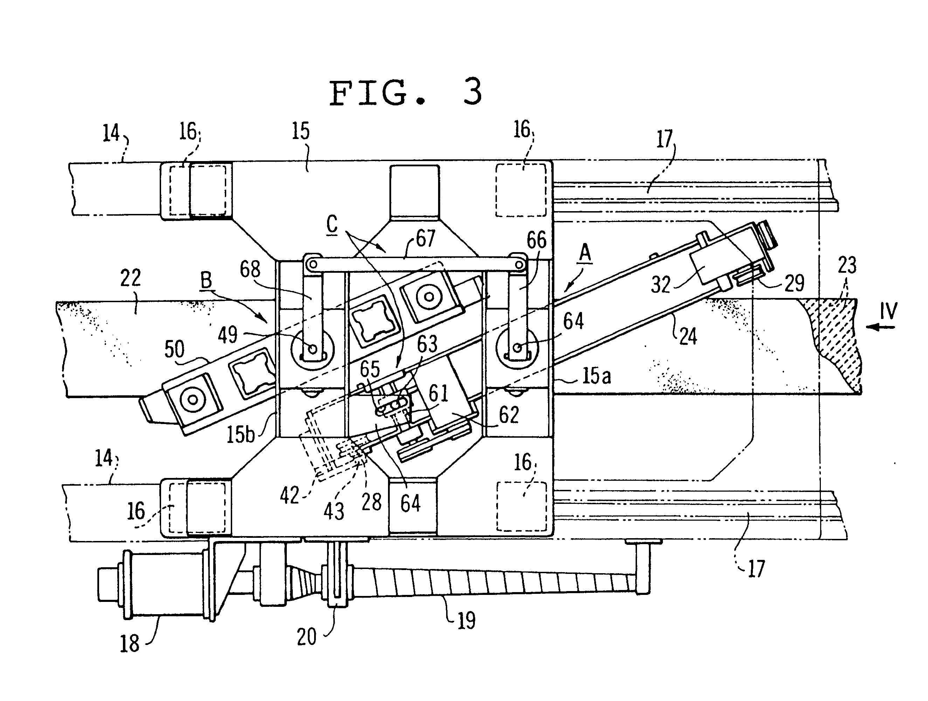

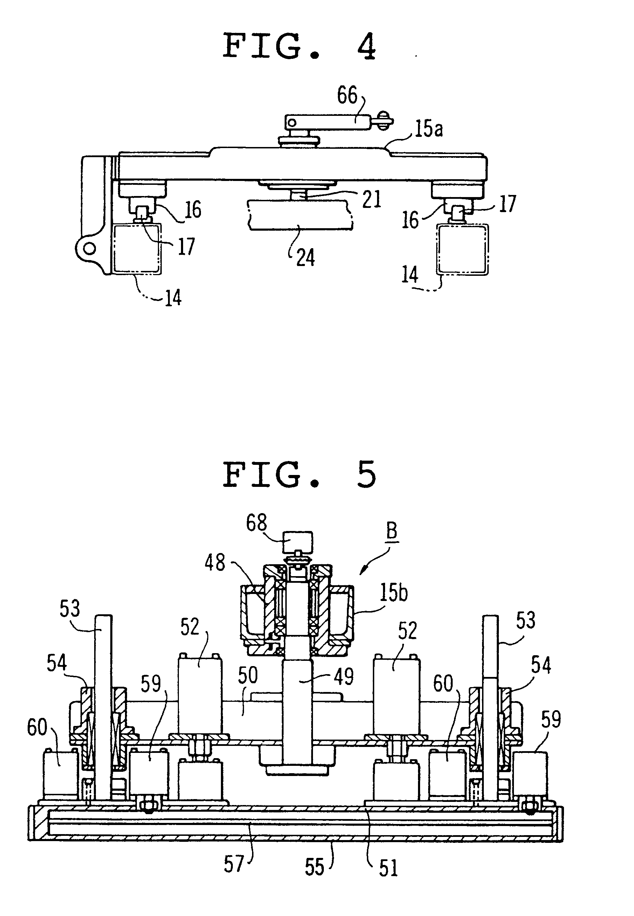

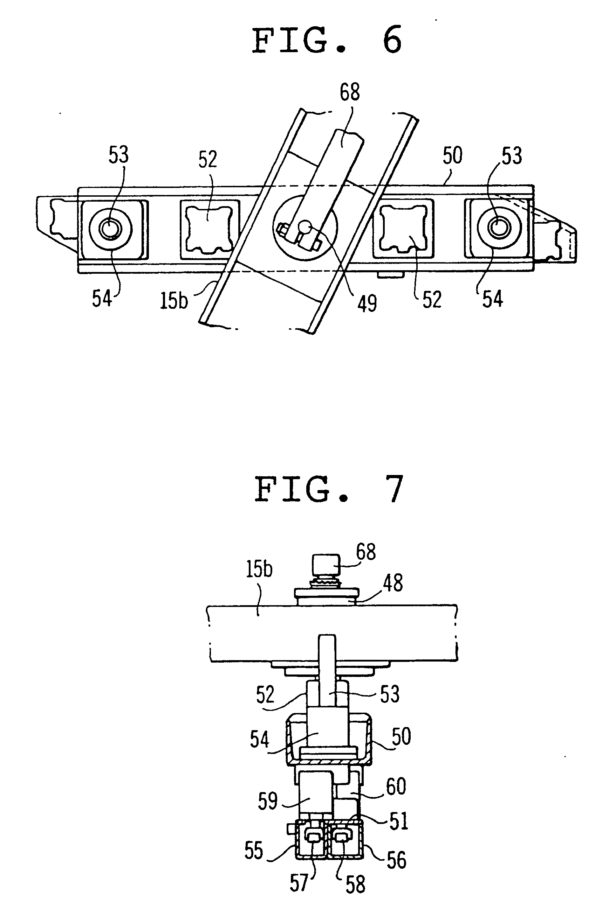

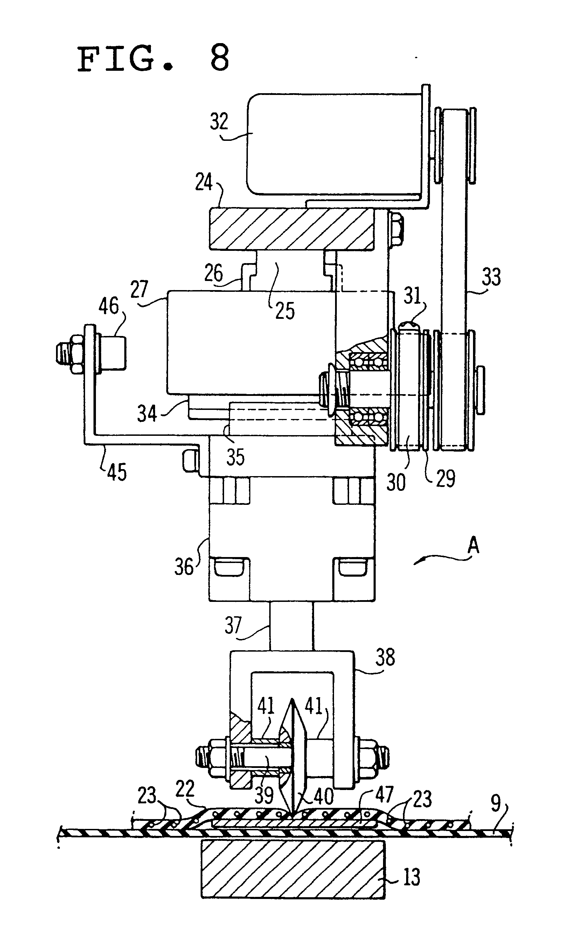

Fig. 1 is a general side view of an apparatus for wrapping a belt-like member according to one preferred embodiment of the present invention. Reference numeral 1 designates a drum which is rotatably supported from a frame (not shown) and which is rotationally driven by a D.C. servo motor associated with a reduction gear and is installed on a floor surface 2. A belt conveyor 5 is supported by four posts 4 erected from the floor surface 2, at the rear of the drum 1. The belt conveyor 5 consists of a pair of left and right conveyor frames 6, a drive roller 7 and a driven roller 8 both mounted horizontally in a rotatable manner between the left and right conveyor frames 6, respectively, at the front portion and the rear portion thereof and a conveyor belt 9 extending between these rollers 7 and 8. The middle of the conveyor frames 6 are rotatably supported from the front posts 4 via pivots 10, and the rear portions of the frames are coupled to the rear posts 4 via cylinder devices 11. Accordingly, by extending and contracting the cylinder devices 11 the belt conveyor 5 can swing between the position shown by a solid line in Fig. 1 where its front end is separated downwards from the drum 1, and the position shown by chain line in Fig. 1 where its front end comes into contact with the circumferential surface of the drum. Reference numeral 12 designates a D.C. servo motor fixed to the outer surface of the conveyor frame 6 which drives the roller 7 via a reduction gear 12a. Referring to Fig. 2, plate-like magnet blocks 13a, 13b, 13c, 13d and 13e are disposed between the upper side travelling portion and the lower side travelling portion of the conveyor belt 9. The magnet blocks 13b, 13c, 13d and 13e (i.e. other than the magnet block 13a) are individually supported in a vertically movable manner.

Mounted at the top ends of the supports 4 are a pair of left and right upper frames 14 extending to the front and rear, substantially parallel with the conveyor frames 6. Between the upper frames 14 is provided a travelling base 15 mounted so as to be able to travel back and forth. The travelling base 15 is slidably engaged via slide members 16 provided at its four corners at the front and the rear on the left and right sides, with guide rails 17 provided on the upper surfaces of the upper frames 14. Furthermore, a nut member 20 provided on the travelling base 15 is threadedly engaged with a screw member 19 which is driven by a motor 18 provided on the side surface of the upper frame 14. Thus, the travelling base 15 moves back and forth along the guide rails 17 driven by the motor 18. As shown in Fig. 3, the travelling base 15 is constructed with its left and right side portions being connected at their rear and front portions by means of connecting sections 15a and 15b. A cutting device A is suspended from the rear connecting section 15a and an attracting device B is suspended from the front connecting section 15b.

The cutting device A is provided with a path of travel member 24 rotatably suspended via a rotary shaft 21 (Fig. 4) perpendicular to the connecting section 15a. The path of travel member extends oblique to the conveyor belt 9 at an angle substantially equal to the bias angle of steel cords 23 in a belt-like member 22 on the conveyor belt 9. Fig. 8 shows a front view of the cutting device A viewed in the longitudinal direction of the travelling path member 24. Provided along the longitudinal axis on the lower surface of the path of travel member 24, is a guide rail 25. A travelling member 27 is supported from this guide rail 25 via slide pieces 26 which are integral with the travelling member 27. At the left and right ends of the path of travel member 24 are pivotally supported a driven pulley 28 and a drive pulley 29, respectively (See Fig. 3). A toothed belt 30 extends between the pulleys 28 and 29, and the upper side portion of the toothed belt 30 is fixedly secured to the travelling member 27 by means of a screw 30 (Fig. 8.) The drive pulley 29 is driven, via a toothed belt 33, by a travelling motor 32 supported on the upper surface of the path of travel member 24. Accordingly, when the travelling motor 32 rotates, the travelling member 27 is driven via the toothed belt 30, and performs rectilinear travelling motion along the guide rail 25.

Another rail 34 is provided on the lower surface of the travelling member 27 at right angles to the above-mentioned guide rail 25, i.e. at right angles to the direction of travel of the travelling member 27. Slide pieces 35 are slidably engaged with the rail 34. The slide pieces 35 are fixedly secured to a cylinder device 36 consisting of a cylinder and a piston. It is to be noted that the slide pieces 35 are normally held at the central position of the rail 34 by means of a biasing device (not shown).

A U-shaped cutter bracket 38 is fixedly secured to the bottom end of a piston rod 37 projecting downwards from the cylinder device 36, and a cutter 40 is rotatably fitted around a shaft 39 bridging the left and right side pieces of the bracket 38. The cutter 40 is positioned at the centre of the shaft 39 by means of left and right spacers 41.

A sensor bracket 42 is provided at the end of the above-described path of travel member 24 on the side of the driven pulley 28, with its base end portion fixedly secured to the path of travel member 24 (Fig. 3). A reflection-type light sensor 43 is mounted so as to be opposed to the side surface of the driven pulley 28, and stuck on this side surface of the driven pulley 28 is a reflective tape 44 in which a circle is divided into 8 equal sectors. Non-reflective portions are provided on alternate sectors as shown in Fig. 9, so that the intensity of reflected light sensed by the reflection-type light sensor 43 varies depending upon the rotational position of the driven pulley 28. Accordingly, the position of travel of the travelling member 27 can be derived by detecting the rotational state of the driven pulley 28 by means of the reflection-type light sensor 43 and by counting the number of variations of the detected value.

In addition, a sensor bracket 45 projects from the side surface of the above-described cylinder device 36 and bends upwards thereby to be opposed to the side surface of the travelling member 27. A range sensor 46 which detects a distance by means of light is mounted to the portion of the bracket 45 opposed to the travelling member 27. The range sensor 46 moves integrally with the cylinder device 36 at right angles to the direction of travel of the travelling member 27 and can detect the distance from the travelling member 27 at any arbitrary moment. In other words, in contrast to the above-described reflection-type light sensor 43 which detects the position of the cutter 40 in the direction of travel, the range sensor 46 detects the position of the cutter 40 at right angles to the direction of travel.

A knife-edge bearing plate 47 is mounted on the side of the belt conveyor 5 which conveys the belt-like member 22 between the left and right conveyor frames 6 and under and parallel to the path of travel member 24 (See Fig. 8). Under the knife-edge bearing plate 47 and the conveyor belt 9 is provided the above-described magnet block 13. The belt-like member 22 is attracted downwards by the magnet block 13, and is cut by the cutter 40 on the aforementioned knife-edge bearing plate 47 whilst stuck to the knife-edge bearing plate 47.

As shown in Figs. 3 and 5 to 7, the attracting device B includes a support frame 50 provided on a vertical rotary shaft 49, which shaft is rotatably mounted via a bearing 48 at the centre of the front connecting portion 15b of the travelling base 15, the frame extending in parallel to the above-described path of travel member 24. Under, and parallel to, the aforementioned support frame 50 is provided a support plate 51. The support plate 51 is suspended in a vertically movable manner from the support frame 50 via cylinder devices 52. Guide shafts 53 at the opposite end portions of the support frame 50 are guided by bearing members 54 thus allowing the support plate 51 to be raised and lowered while remaining parallel to the support frame 50. The support plate 51 is provided along the front and rear side portions with rectangular pipes 55 and 56, respectively. Extending longitudinally within these rectangular pipes 55 and 56 are permanent magnets 57 and 58. The permanent magnets 57 and 58 are supported from the support plate 51 via cylinder devices 59 and 60, respectively, so that they can be moved up and down within the rectangular pipes 55 and 56 by the action of the cylinder devices 59 and 60.

A revolving device C (Fig. 3) is provided for making the above-described cutting device A and attracting device B revolve simultaneously about the rotary shaft 21 and the rotary shaft 49, respectively. More particularly, a screw shaft 61 is rotatably supported at the front of, and transverse to, the aforementioned path of travel member 24, and is adapted to be driven by a servo motor 62 mounted on the path of travel member 24. A nut threadedly engaged with the screw shaft 61 provides a projection shaft 63 protruding upwards, and engaging with a slot hole 65 in a bracket 64 provided on the front connecting section 15b. Accordingly, when the screw shaft 61 rotates when driven by the motor 62, the projection shaft 63 moves relative to the screw shaft 62 in the axial direction thereof, and the path of travel member 24 revolves about the axis of the rotary shaft 21. Since the rotary shaft 21 is coupled to the rotary shaft 49 via a rotary arm 66, a connecting rod 67 and a rotary arm 66, when the path of travel member 24 revolves, the support frame 50 also revolves in the same direction and by the same angle.

Cutting of the belt-like member 22 is carried out in the following manner: first, the travelling motor 32 is actuated, causing the travelling member 27 to move jointly with the cutter 40 up to one edge of the belt-like member 22 and to be positioned. Subsequently, the cylinder device 36 operates and the cutter 40 descends, and, as shown in Fig. 8, when the V-shaped knife edge cuts into the belt-like member 22 and reaches the knife-edge bearing plate 47, the edge portion of the belt-like member 22 is cut. Thereafter, when the travelling member 27 is made to travel along the guide rail 25 by actuating the travelling motor 32, the cutter 40 proceeds to cut the belt-like member 22, and when it has reached the other side edge of the belt-like member 22, cutting is completed. During this period, if the slide pieces 35 are always located at the centre position of the rail 34, the locus of the cutter 40, i.e. the line of cut will be a straight line parallel to the guide rail 25.

However, in the event that a steel cord 23 is present just under the knife-edge of the cutter 40 after it has been lowered, the slide pieces 35 can slide along the rail 34, because the reaction force of rubber in the proximity of the steel cord 23 is large. The cutter 40 can thereby displace at right angles to the direction of travel, and can cut into the portion between the steel cords thereby to cut the belt-like member 22 between the steel cords 23. Accordingly, the locus of the cutter 40 deviates from the predetermined line of travel (predetermined straight reference line of travel) defined by the guide rail 25, and if the steel cord 23 is curved, the shape of the locus will be a curve.

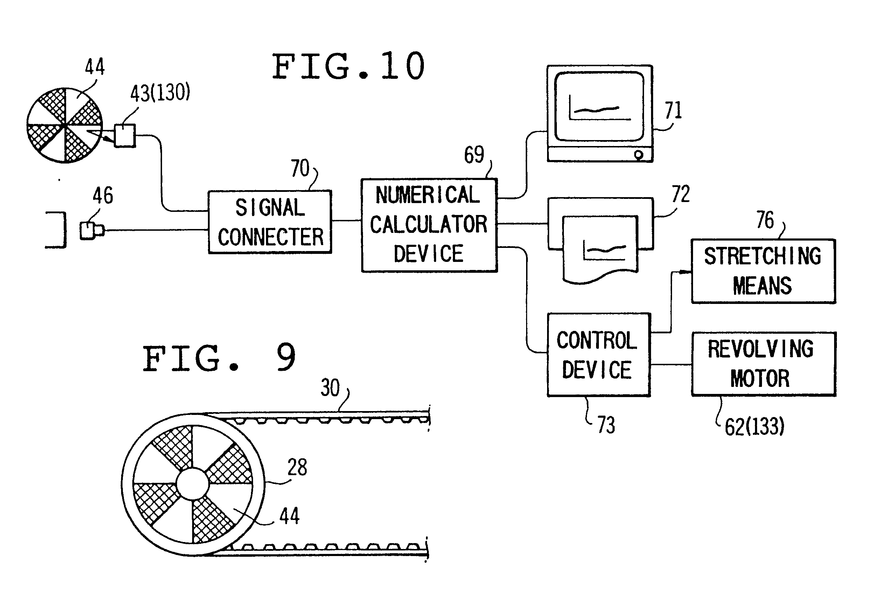

By processing output signals from the above-mentioned reflection-type light sensor 43 and range sensor 46, the locus configuration of the cutter 40 is stored as coordinate values in a numerical calculator device 69 (Fig. 10). More particularly, assuming that the direction of travel of the cutter 40 (the direction of travel of the travelling member 27) is called "Y-direction" and the direction at right angles to the above-mentioned direction is called "X-direction", the position of the cutter 40 in the Y-direction can be detected digitally as a count value by means of the reflection-type light sensor 43. Count values are detected periodically, and when these particular count values are detected, the position of the cutter in the X-direction is input from the range sensor 46 to a signal converter to be represented numerically. The periodic count values in the Y-direction and numerical information at the respective count values in the X-direction are stored in the numerical calculator device 69, in pairs as Y-coordinates and X-coordinates respectively. The measurement of the above-described Y-values and X-values is effected, for instance, each time the cutter 40 moves by 2mm in the Y-direction, and the average value of five successive X-values is stored in the numerical calculator device 69 as a representative X-coordinate for the corresponding interval of 10mm in the Y-direction.

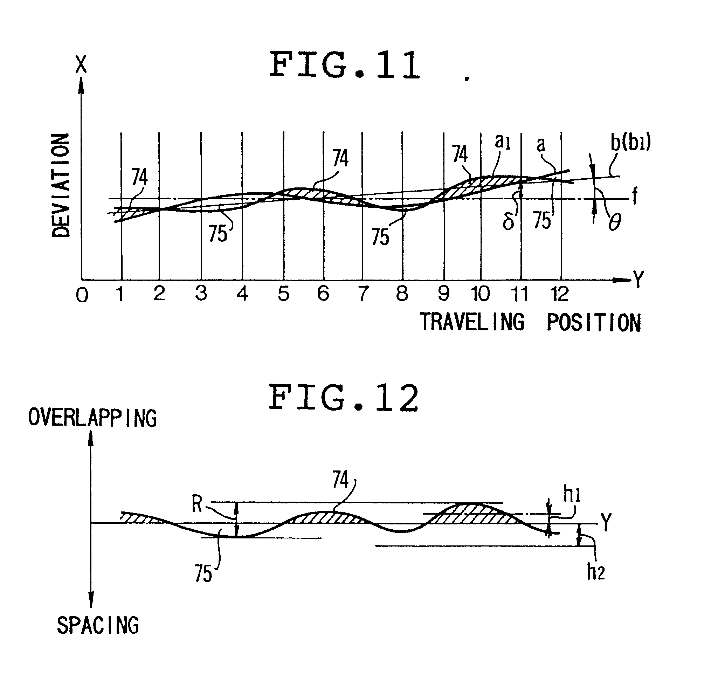

If a CRT 71 or a printer 72 is connected to the numerical calculation device 69 and the results of calculation are graphically represented, the locus curve of the cutter 40 as indicated at $\underline{a}$ in Fig. 11 is obtained. Reference character $\underline{f}$ represents a predetermined straight reference line of travel. The numerical calculator device 69 also calculates a straight line $\underline{b}$ approximating the locus curve $\underline{a}$, and also, the inclination angle of the approximating straight line $\underline{b}$, for instance, the deflection angle $\theta$ between the straight lines $\underline{b}$ and $\underline{f}$. The amount of deviation $\delta$ from the predetermined straight reference line of travel at the respective points on the cutting line is calculated and stored.

After the leading end of the belt-like member 22 has been cut in the above-mentioned manner, the conveyor belt 9 is made to advance with the belt-like member 22 thereon, by driving the drive roller 7 by means of the motor 12. The drive motor 12 is adapted to have its rotational position precisely positioned, and thus the distance that the conveyor belt 9 advances can be strictly regulated to a predetermined value, which is generally somewhat shorter than the circumferential length of the drum 1.

Subsequently, the trailing end of the belt-like member is cut by the cutter 40 in a similar manner to the above-described method, and the locus curve of the cutter 40, an approximating straight line of the locus curve, the inclination of that approximating straight line and the amount of deviation from the predetermined straight reference line of travel at the respective points on the line of cut are obtained. However, this locus curve, approximating straight line and inclination angle do not always coincide with the locus curve $\underline{a}$, approximating straight line $\underline{b}$ and inclination angle $\theta$ obtained upon cutting of the leading end of the belt-like member 22.

After cutting the trailing end, the attracting device B is positioned to coincide with the line of cut by retreating the travelling base 15 and is then made to descend. The portion in front of the line of cut, i.e. the trailing end of the belt-like member 22 is attracted by the permanent magnet 57 descending within the rectangular pipe 55, while the portion behind the line of cut, i.e. the leading end of the succeeding raw material, is attracted by the permanent magnet 58 descending within the rectangular pipe 56. Subsequently, by raising the attracting device B, the end portions in front of and behind the line of cut are pulled up from the top surface of the conveyor belt 9 while holding them with their respective configurations maintained independently. It is to be noted that in the above-mentioned and following steps of the process, the magnet block 13 under the conveyor belt 9 is raised or lowered to cooperate with separation or attraction of the belt-like member 22 from or to the conveyor belt 9.

Next, by rotating the attracting device B by means of the revolving device C to change the inclination angle of the rectangular pipes 55 and 59 with respect to the direction in which the belt-like member 22 is conveyed, the inclination angle of the approximating straight line derived from the trailing end cutting curve (the cutter locus curve) is corrected so as to coincide with the inclination angle of the approximating straight line $\underline{b}$ derived from the leading end cutting curve $\underline{a}$. This correction is carried out by means of the numerical calculator device 69 calculating the difference between the inclination angles of the leading and trailing ends, sending the information relating to this difference to the control device 73, and controlling the rotation of the revolving motor 62 by said control device 73. Fig. 11 illustrates the trailing end cutting curve $\underline{a}_1$ with its approximating straight line $\underline{b}_1$ aligned with the approximating straight line $\underline{b}$ derived from the leading end cutting curve $\underline{a}$.

After the inclination angle of the trailing end line of cut has been corrected in the above-described manner, the attracting device B is made to descend, and the belt-like member 22 is placed and then attracted onto the conveyor belt by raising the permanent magnet 57 within the rectangular pipe 55 without changing the corrected inclination angle of the trailing end line of cut. (The front portion of the belt-like member 22 is continuously kept attracted by the fixed magnet block 13a). Subsequently, the attracting device B is raised again to separate the succeeding portion of the raw material from the conveyor belt 9. The entire belt conveyor 5 is rotated about the pivot 10 to bring its front end into contact with the circumferential surface of the drum 1, and the belt conveyor 5 is driven by the motor 12. The cut and formed belt-like member 22 is conveyed by means of the conveyor belt 9 and is then wrapped and stuck around the circumferential surface of the drum 1 which is rotationally driven by the motor 3.

It is to be noted that correction of the inclination angle of the line of cut by means of the attracting device B and the revolving device C, as described above, could be performed after cutting of the leading end and after cutting of the trailing end to make, at the respective time, the approximating straight line $\underline{b}$ derived from the leading end cutting curve $\underline{a}$ and the approximating straight line $b_1$ derived from the trailing end cutting curve $a_1$ both coincide with the predetermined reference line of travel $\underline{f}$. Furthermore, in place of the predetermined straight reference line of travel, a straight line at a process angle, a straight line at an angle equal to a process angle plus a certain correction value or a straight line at the last angle of cutting of the trailing end of the belt-like member could be employed. In this case, the ends can be held and set on the conveyor after the direction of the line of cut has been corrected so as to coincide with the straight reference line.

While the belt-like member 22 is wrapped around the drum with the drum 1 and the conveyor 5 driven at the same speed with respect the triangular portions at the leading and trailing ends, the central portion excluding said triangular portions is wrapped while it is stretched by any appropriate stretching means such as, for example, by the motor 3 and the motor 12 controlling the relative speed of rotation of the drum 1 and the conveyor 5.

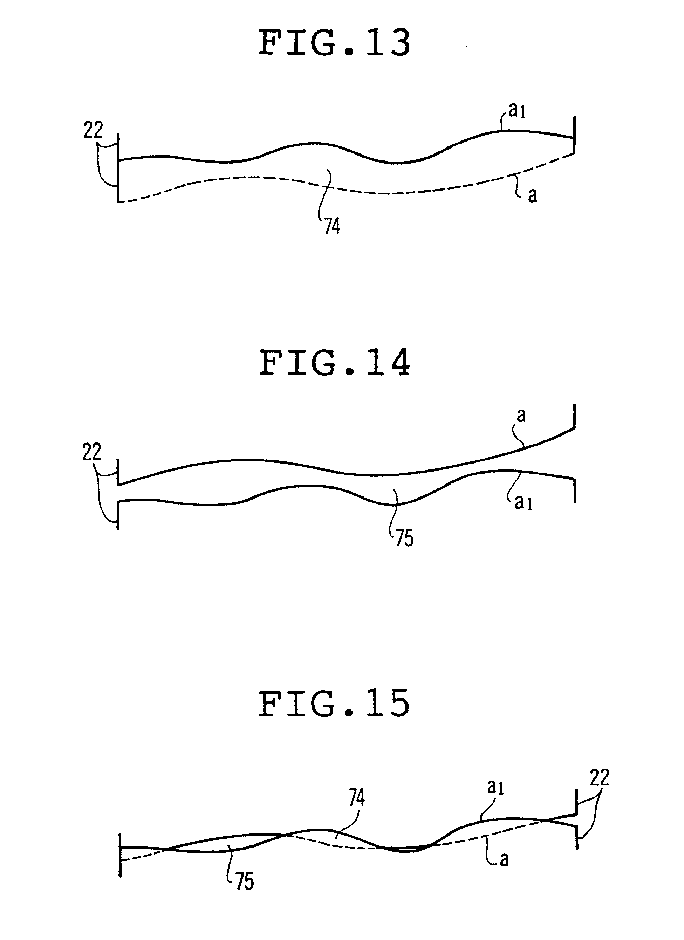

Since the actual lines of cut $\underline{a}$ and $\underline{a}_1$ deviate from the predetermined straight reference lines of travel $f$ and $f_1$, respectively, the length of the belt-like member 22 can be changed by an amount corresponding to these deviations, even if the distance to be advanced by the conveyor belt 9 had been strictly controlled to be a predetermined value somewhat shorter than the circumferential length of the drum. Furthermore, since the actual lines of cut $\underline{a}$ and $\underline{a}_1$ deviate from the straight lines $\underline{b}$ and $b_1$, respectively, if the amount that the belt-like member is to be stretched upon wrapping around the drum is merely selected so that the length of the belt-like member 22 takes a predetermined value somewhat shorter than the circumferential length of the drum one of three situations arises. The first is that an overlapping end portion will be produced over the entire line of cut as shown in Fig. 13, the second is that a spaced end portion will be produced over the entire line of cut as shown in Fig. 14 and the third is that both overlapping and spaced end portions will be produced as shown in Fig. 15. Fig. 12 is a diagram in which these overlapped and spaced amounts are plotted along direction of travel of the cutter in the Y-direction. In view of manufacturing a tyre, the above-mentioned overlapped and spaced amounts are required to fall within the predetermined limited ranges $\underline{h}_1$ and $\underline{h}_2$, respectively.

To this end, the numerical calculator device 69 calculates the respective overlapped and spaced amounts on the basis of the displacement (amount of deviation) from the predetermined straight reference line of travel of the lines of cut $\underline{a}$ and $\underline{a}_1$ at the leading end and at the trailing end. It then calculates the amount of stretching of the belt-like member 22 required to make these values fall within the above-mentioned limited ranges and sends the calculated amounts to the control device 73. The control device 73 controls the stretching means 76, for example, by operating the above-described drive motors 3 and 12 at different relative speeds on the basis of the data sent from the calculator device 69, and thereby corrects the amount that the belt-like member 22 is stretched. The amount of stretching required for correction is calculated in the following manner.

Generally, the overlapped value limit $h_1$ is set smaller than the spaced value limit $h_2$ to avoid cords overlapping. For the purposes of this example, it is assumed that the value limits are set as $h_1$=0.25mm and $h_2$=0.5mm. The numerical calculator device 69 calculates the difference R between the maximum and minimum values of the overlapped amount in the case where only overlapped portions are present, or the difference R between the maximum and minimum values of the spaced amount in the case where only spaced portions are present, but it calculates the sum R of the maximum value of the overlapped amount and the maximum value of the spaced amount in the case where both overlapped and spaced portions are present. The amount of stretching required for correction is calculated on the basis of the value of R. That is:

In the case of R ≤ 0.5mm, the amount of stretching is corrected so that the maximum overlapped amount and the maximum spaced amount can be equalized. Since R ≤ 0.5mm is fulfilled, both the overlapped amount and the spaced amount are equal to or less than 0.25mm, and thus fall within the limited range.

In the case of 0.5 <R ≤ 0.75mm, correction is made so that the maximum overlapped amount becomes 0.25mm. Since the maximum value of R is 0.75mm, the spaced amount is at most 0.5mm, and thus falls within the limited range.

In the case of R > 0.75mm, correction is made so that the maximum overlapped amount becomes 0.25mm, but at this time, since the spaced amount exceeds 0.5mm, an anomaly alarm is issued.

It is to be noted that while the configuration of the line of cut was measured by calculation on the basis of data obtained by detecting the position in the direction of travel of the cutter and also detecting the displacement at right angles to the direction of travel of the cutter in the above-described preferred embodiment, another method of measuring the configuration of the line of cut after cutting, for example, by image pattern processing, could be employed.

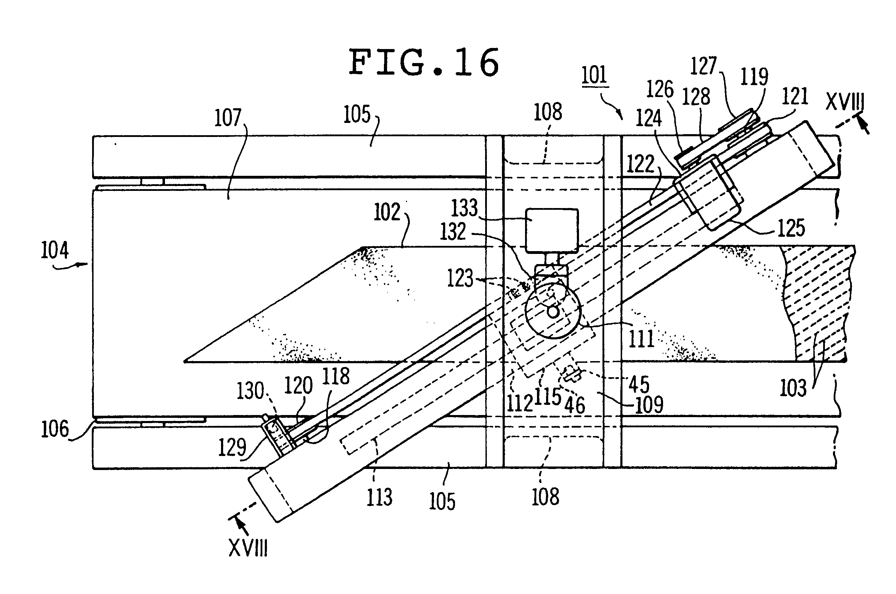

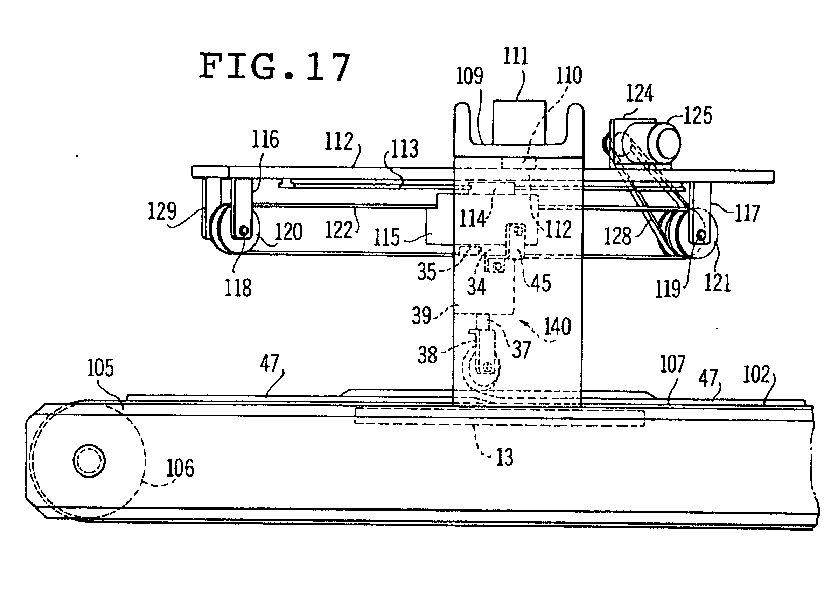

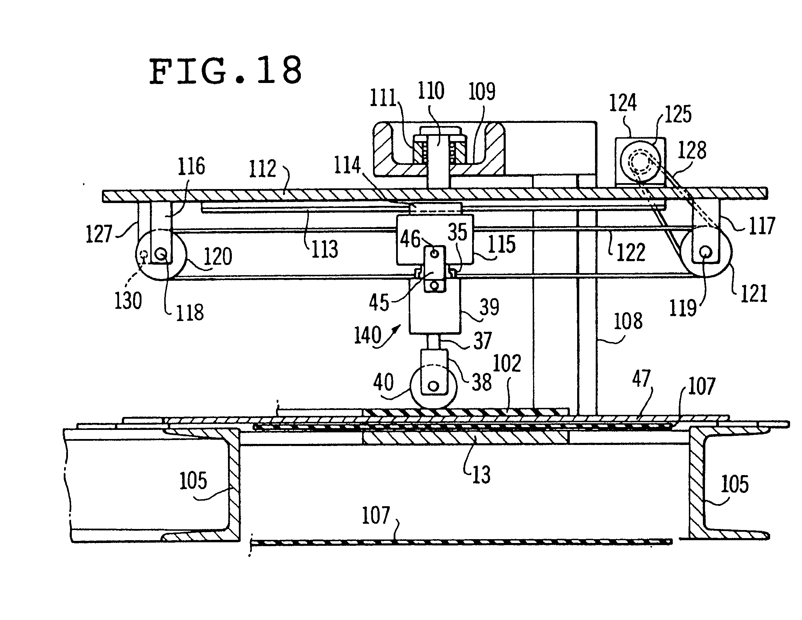

Figs. 16 to 18 illustrate a cutting device according to another preferred embodiment of the present invention. This cutting device 101 is a device for cutting obliquely on a belt conveyor 104, a steel breaker member 102 used in a tyre. Within the steel breaker member 102 are embedded a large number of steel cords 103 at a fixed bias angle with respect to the longitudinal axis of the member 102. This steel breaker member 102 is cut in the direction of the bias angle along the steel cords 103.

The belt conveyor 104 is supported by left and right frames 105. A conveyor belt 107 extends between rollers 106 provided both at the front and rear end portions of the frames 5, and the belt-like steel breaker member 102 is placed on the upper side of the conveyor belt 107 and is conveyed forwards (to the left as viewed in Fig. 16).

Provided on the left and right frames 105 are posts 108 and a horizontal support frame 109 is mounted therebetween. A support shaft 110 is rotatably supported via a bearing 111 at the centre of the horizontal support frame 109. This projects downwardly, and fixedly secured to its bottom end in a substantially central position is a horizontal support plate 112. The support shaft 110 is rotated by a revolving motor 133 via a reduction gear 132 provided on the horizontal support frame 109. The horizontal support plate 122 revolves within a horizontal plane as a result of rotation of the support shaft 110. Accordingly, the longitudinal axis of the horizontal support plate 112 can be aligned at an angle relative to the direction of travel of the conveyor belt 107. This angle is approximately equal to a reference value of the bias angle of the steel cords 103 in the steel breaker member 102.

A linear ball slide guide rail 113 is laid on the bottom surface of the horizontal support plate along the longitudinal axis thereof. A linear ball slide guide 114 is slidably fitted to the linear ball slide guide rail 113, and a travelling support member 115 is fixedly secured to the bottom surface of the linear ball slide guide 114.

Pivotal support base plates 116 and 117 are provided at the front of both the left and right end portions of the horizontal support plate 112, suspended vertically therefrom. At the bottom end portions of the respective pivotal support base plates 116 and 117 are pivotably mounted rotary shafts 118 and 119. A driven pulley 120 is integrally fitted and secured to one rotary shaft 118, a drive pulley being fitted and secured to the other rotary shaft 119. A toothed belt 122 extends between both pulleys 120 and 121. A predetermined location of the upper side of the toothed belt 122 is fixedly secured to the above-mentioned travelling support member 115 by means of a screw 123.

A motor 125 supported by a support plate 124 is provided on the upper surface of the horizontal support plate 112 in the proximity of the drive pulley 121. A pulley 126 is fitted and secured to a drive shaft projecting from the support plate 124. A toothed belt 128 extends between the above-mentioned pulley 126 and a pulley 127 is fitted and secured to the rotary shaft 119 which is integral with the drive pulley 121.

Accordingly, by actuating the motor 125, the drive pulley 121 is rotationally driven via the toothed belt 128. The rotation of the drive pulley 121 rotates the toothed belt 122, and the travelling support member 115 fixedly secured to this toothed belt 122 via the suspending member 114 travels along the rail 113.

Provided on the side of the driven pulley 120 and supported by a sensor bracket 129 is a reflection-type light sensor 130 which is similar to the reflection-type light sensor 43 (Figs. 3 and 9) in the above-described first preferred embodiment.

Suspended from the travelling support member 115 is a cutter device 140, which is similar to the cutter device in the above-described first preferred embodiment and shown in the Fig. 8. With regard to this cutter device 140, component parts similar to those shown in Fig. 8 are given like reference numerals, and a detailed description thereof will not be given.

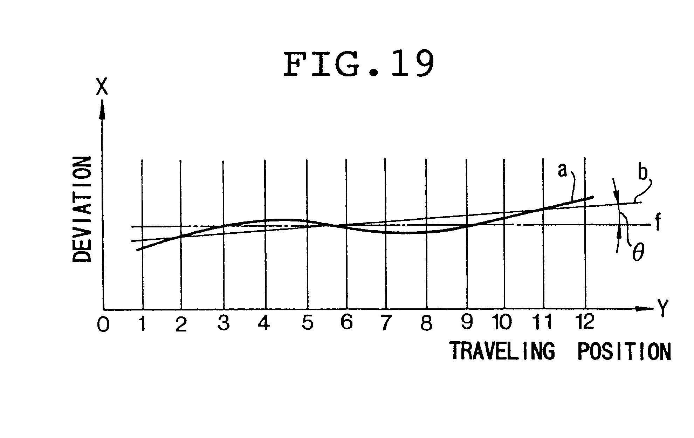

Detection signals issued from the reflection-type light sensor 130 and the range sensor 46 associated with the cutter device 140 are, in a manner similar to the above-described first preferred embodiment, input into the signal converter 70 and converted into numerical values. Furthermore, they are input into the numerical calculator device 69 to be calculated into coordinate values. By representing the results of the calculations in a graphical manner, similar to that described previously, each time the steel breaker member 102 is cut by the cutter 40, a locus curve of the cutter 40, i.e. a cutting profile curve as shown at a in Fig. 19, is obtained. It is to be noted that in Fig. 19, unlike Fig. 11 in which two curves a and $a_1$ are illustrated, only the curve a is picked up and shown.

The numerical calculator device 69 calculates the angle θ formed between the approximating straight line b and the predetermined straight reference line of travel f. It also adds a preset angle of travel of the cutter 40 to this angle θ, to calculate the bias angle φ of the approximating straight line b with respect to the steel breaker member 102. This calculated bias angle φ is input into the control device 73.

The control device 73 calculates an average value φa of the bias angle φ for the last 5 inputs. When the next cutting operation is about to start, the revolving motor 133 is driven on the basis of the average value φa to rotate the horizontal support plate 112 to make the angle of travel of the cutter 40 substantially coincide with the above-mentioned average value φa with a tolerance of ± 0.5 degrees.

Since cutting is started after the angle of travel of the cutter 40 has been made to coincide with the above-mentioned average value of φa in the above-described manner, the direction of the knife-edge of the cutter 40 will substantially align with the embedded steel cords 103. In other words, the variation of the bias angle of the steel cords 103 in the proximity of the portion of the steel breaker member 102 which to be cut is reflected in the value φa which is the average of the last 5 cutting angles. It can be naturally foreseen that, in view of the gradually varying bias angle of the cords in the steel breaker member 102, that this variation will continue several times, and therefore, the direction of the knife-edge of the cutter 40 can be considered to be substantially coincident with the bias angle of the steel cords 103. Accordingly, if the cutter 40 travels at the same angle of travel, it will travel substantially along the steel cords 103, and hence the inconvenience of the cutter 40 riding on a steel cord 103 will not occur.

As described above, upon cutting, since the angle of travel is always corrected to correspond to an average of the last 5 cutting angles, cutting is properly carried out following the bias angle of the embedded cords 103 in the steel breaker 102, even though this angle is not always constant and varies depending upon the section of the steel breaker 102.

It is to be noted that the end portion of the cut steel breaker member 102 is attracted from above by means of a separately provided attracting device after the magnet block 13 has retreated downwards, and is raised while maintaining the cut configuration. It is then moved to a predetermined position simultaneous with transport of the steel breaker member 102, and the steel breaker member 102 is wrapped around a forming drum.

While the average value of the angle of cut is calculated from the last 5 angles of cut in the above-described preferred embodiment, the invention is by no means limited to this and the average value of the angles of cut can be calculated from any appropriate number of recent angles of cut.

**Claims**

1.  A method for cutting and wrapping a belt-like member, wherein said belt-like member is cut into a fixed length by making first and second inclined cuts to provide leading and trailing ends which are to coincide with each other after the completion of wrapping around a drum to provide a covering substantially matched to the circumferential length of the drum with spacing or overlapping between the leading and trailing ends not exceeding a predetermined maximum value; characterised by the steps of:

    a) cutting the belt-like member by making a cutter travel along a predetermined straight reference line ;
    b) measuring the configuration of the lines of cut at the leading end and at the trailing end,
    c) defining
      i) straight lines which approximate said lines of cut,
      ii) the inclination angles between said approximating straight lines and said predetermined straight reference line, and
      iii) the amount of deviation from said predetermined straight reference line of said approximating straight lines at respective points on said lines of cut;
    d) i) holding and setting said belt-like member on a conveyor while correcting, on the basis of said inclination angle obtained with respect to the trailing end line of cut and said inclination angle obtained with respect to the leading end line of cut, the direction of the trailing end line of cut so that the inclination angle of said trailing end line of cut coincides with the inclination angle of said leading end line of cut, or

d) ii)(a) holding and setting the leading end portion of the belt-like member on said conveyor after correcting the direction of said leading end line of cut so that the approximating straight line of the leading end line of cut coincides with the straight reference line inclined at a predetermined angle after cutting of the leading end, and

(b) holding and setting the trailing end portion of the belt-like member on said conveyor after correcting the direction of said trailing end line of cut so that the approximating straight line of the trailing end line of cut coincides with the straight reference line inclined at said predetermined angle.

e) calculating on the basis of said amount of deviation defined with respect to the leading and trailing ends,the amount of overlap and spacing that would be produced between the leading end and trailing end lines of cut upon completion of wrapping, and

f) correcting the amount of stretch of the belt-like member upon wrapping so that said spaced and overlapped amounts do not exceed said maximum value.

2.  A method of cutting and wrapping a belt-like member, wherein a belt-like member of fixed length, which has been obtained by successively cutting, by means of a cutter, a long sheet material with a large number of cords embedded therein at a predetermined bias angle is fed onto a drum by means of a conveyor and wrapped around the circumferential surface of said drum; characterised by the steps of:

a) measuring the configuration of the line of cut,

b) defining,

i) a straight line which approximates said line of cut, and

ii) the bias angle of said approximating straight line with respect to said belt-like member, and

c) correcting the bias angle of said predetermined straight reference line so as to substantially coincide with the average value of the bias angle of said approximating straight lines obtained from a plurality of recent calculations.

3.  An apparatus for cutting and wrapping a belt-like member, wherein said belt-like member is cut into a fixed length by making first and second inclined cuts, by means of a cutter, to provide leading and trailing ends which are to coincide with each other after completion of wrapping to provide a covering on a drum substantially matched to the circumferential length of said drum with spacing or overlapping between the leading and trailing ends not exceeding a predetermined maximum value, said belt-like member being fed to said drum by means of a conveyor, characterised in that said apparatus comprises:

a) stretching means for stretching said belt-like member as it is wrapped around said drum,

b) a path of travel member extending horizontally above and transverse of said conveyor,

c) a cutter suspended from said path of travel member so as to be able to travel along said member in the longitudinal direction thereof and so as to be displaceable at right angles to said longitudinal direction,

d) holding means capable of holding, independently and while maintaining their configuration, the respective end portions in front of and behind the line of cut of said belt-like member,

e) a rotation mechanism for making said holding means rotate above a vertical axis,

f) means for measuring the configuration of said line of cut,

g) defining means for defining

i) a straight line which approximates said line of cut,

ii) an inclination angle of said approximating straight line with respect to said direction of travel, and

iii) the amount of deviation from said longitudinal direction of said approximating straight line at respective points on said line of cut.

h) rotation control means for controlling said rotating mechanism on the basis of said inclination angle, and

i) stretch amount control means for controlling, on the basis of said amount of deviation, said stretching means upon cutting of the leading and trailing ends of said belt-like member.

4.  An apparatus for cutting and wrapping a belt-like member, which comprises:

a) a travelling mechanism in which a travelling member traverses above a sheet material,

b) a rotation mechanism for rotating said travelling mechanism to change the angle of travel of the travelling member with respect to the sheet material,

c) a cutter suspended from the travelling member which is movable at right angles to its direction of travel,

d) first detector means for detecting the position of travel of said cutter in the direction of said travelling mechanism,

e) second detector means for detecting the displacement of said cutter at right angles to said direction of travel,

f) defining means for defining the angle of cut made by means of said cutter on the basis of signals supplied by said first and second detector means, and

g) control means for driving and controlling said rotation mechanism on the basis of a plurality of recent calculation results derived by said defining means.

# FIG. 1

# FIG. 2

EP 0 447 273 A2

FIG. 3

# FIG. 4

66
15a
16
21
17
16
17
24
14
14

# FIG. 5

68
B
48
15b
53
52
52
53
54
49
54
60
50
60
59
59
57
55
51

# FIG. 6

# FIG. 7

# FIG. 8

EP 0 447 273 A2

## FIG.10

## FIG. 9

# FIG.11 .

# FIG.12

# FIG.13

# FIG.14

# FIG.15

# FIG.16

EP 0 447 273 A2

FIG.17

# FIG.18

# FIG.19

EP 0 447 273 A2

DEVIATION

X

a

b

f

θ

0  1  2  3  4  5  6  7  8  9  10  11  12

Y

TRAVELING  POSITION